# EUROPÄISCHE PATENTSCHRIFT

(11) **EP 2 490 797 B1**
(45) Veröffentlichungstag und Bekanntmachung des Hinweises auf die Patenterteilung: **22.04.2015**
(21) Anmeldenummer: 10768768.3
(22) Anmeldetag: 19.10.2010
(51) Int. Cl.: B01J 2/16, B01J 8/44

(54) **VORRICHTUNG ZUM BEHANDELN VON PARTIKELFÖRMIGEM GUT MIT EINEM DOPPELFLUTIGEN STRÖMUNGSBODEN**
DEVICE FOR TREATING PARTICULATE MATTER HAVING A TWO-PASS FLOW FLOOR
DISPOSITIF DE TRAITEMENT DE PRODUIT PARTICULAIRE COMPRENANT UNE BASE DE CIRCULATION À DOUBLE FLUX

(30) Priorität: 21.10.2009 DE 102009051584
(43) Veröffentlichungstag der Anmeldung: 29.08.2012
(73) Patentinhaber: Hüttlin, Herbert, 79585 Steinen (DE)
(72) Erfinder: Hüttlin, Herbert, 79585 Steinen (DE)
(74) Vertreter: Witte, Weller & Partner Patentanwälte mbB
(86) Internationale Anmeldenummer: PCT/EP2010/065703
(87) Internationale Veröffentlichungsnummer: WO 2011/048085

(56) Entgegenhaltungen:
- EP-A1- 1 407 815
- WO-A1-01/72409
- WO-A1-02/100527
- DE-A1- 10 258 414
- DE-A1-102006 006 379

## Beschreibung

Die Erfindung betrifft eine Vorrichtung zum Behandeln von partikelförmigem Gut, mit einer Prozesskammer zum Aufnehmen und Behandeln des Gutes, wobei ein Boden der Prozesskammer Schlitze aufweist, über die Prozessluft mit einer horizontalen Bewegungskomponente in die Prozesskammer einführbar ist, wobei die Schlitze derart ausgerichtet sind, dass in einem radial äußeren Bereich eine erste Strömung entsteht, die eine von außen nach innen gerichtete Bewegungskomponente aufweist, und dass in einem radial inneren Bereich eine zweite Strömung entsteht, die eine von innen nach außen gerichtete Strömungskomponente aufweist, wobei die beiden oppositären Strömungen längs einer kreisförmigen Aufbruchzone aufeinander treffen.

Eine derartige Vorrichtung ist aus der EP 1 395 358 B1 bekannt.

Derartige Vorrichtungen dienen dazu, um ein partikelförmiges Gut zu trocknen, zu granulieren oder zu coaten.

Ein gasförmiges Medium, sogenannte Prozessluft, wird über den ebenen Boden in die Prozesskammer eingeführt und tritt dabei durch die zahlreichen Schlitze mit einer horizontal gerichteten Bewegungskomponente in die Prozesskammer ein. Die Schlitze sind jeweils kreisförmig und werden durch übereinander gelegte und im Bereich der Schlitze sich überlappende Ringbleche aufgebaut.

Im radialen äußeren Bereich ist jeweils ein Ringblech über dem nächst radial inneren Ringblech angeordnet und überlappt es etwas dabei. Dadurch entsteht eine von außen nach innen gerichtete Strömung an Prozessluft, wenn diese durch die Schlitze hindurchtritt.

Im radial inneren Bereich sind die Ringbleche so gelegt, dass ein Ringblech, das radial nächst äußere Ringblech überlappt. Dadurch entsteht eine von radial innen nach radial außen gerichtete zweite Strömung.

Diese beiden Strömungen treffen in einer kreisförmigen Aufbruchzone aufeinander, wodurch die Prozessluft vertikal nach oben abgelenkt wird.

Ist der Boden mit einem partikelförmigen Gut belegt, so wird dieses durch die Prozessluft entsprechend bewegt, d.h. im radial äußeren Bereich von außen nach innen auf die Aufbruchzone zu, im radial inneren Bereich von innen nach außen gerichtet auf die Aufbruchzone zu. Im Bereich der ringförmigen Aufbruchzone findet eine besonders intensive Vermischung und Verwirbelung der Gutteilchen durch die nach oben gerichteten umgelenkten Prozessluftströme statt. Das eröffnet die Möglichkeit in der Aufbruchzone Medien zum Behandeln des Gutes zuzuführen, beispielsweise eine klebrige Flüssigkeit beim Granulieren oder eine auf die Oberfläche aufzutragende Substanz beim Coaten. Die nach oben bewegten Gutteilchen des radial äußeren Bereiches erhalten eine radial nach außen gerichtete Bewegungskomponente, die des radial inneren Bereiches eine nach radial innen gerichtete Komponente. Die Gutteilchen bewegen sich alsbald, nachdem das Behandlungsmedium auf diese aufgetragen wurde, voneinander weg, so dass ausreichend Zeit und Raum zur Verfügung steht, dass die aufgesprühten Medien abtrocknen.

Die Gutteilchen des radial äußeren Bereiches bewegen sich Richtung der radial äußeren Wand der Prozesskammer und fallen dann durch diese abgelenkt aufgrund der Schwerkraft wieder auf den Boden zurück. Die Gutteilchen des radialen inneren Bereiches erhalten eine Bewegungskomponente in Richtung des mittigen Zentrums, so dass sie sich dorthin bewegen und aufgrund der Schwerkraft dann herabfallen. Meist ist ein mittiger Kegel vorhanden, der die herabfallenden Gutteilchen wieder gezielt dem inneren Bereich des Bodens zuführt.

Da die Prozessluft mit einer horizontalen Bewegungskomponente durch den Boden in die Prozesskammer eintritt, entsteht eine Art Luftpolster, auf dem die verwirbelten Gutteilchen ruhen. Es entsteht somit sowohl im radial äußeren Bereich als auch im radial inneren Bereich ein Ring an verwirbelten Gutteilchen.

Wird der Prozessluft auch noch eine umfängliche Komponente auferlegt, dreht sich der Ring, so dass die in einem Ring verwirbelten Teilchen eine toroidale Bewegung in dem sich drehenden Ring durchlaufen.

Dadurch wird zum einen in der Aufbruchzone eine besonders intensiver Kontakt zwischen den aufgebrachten Medien und dem zu behandelnden Gut erzielt, durch den toroidal drehenden Ring wird die Möglichkeit eröffnet, zwischen den einzelnen Behandlungszyklen ausreichend Raum oder Wegstrecke zur Verfügung zu stellen, um die zwischen den einzelnen Behandlungszyklen ablaufenden Vorgänge sicherzustellen, z.B. Antrocknen einer Substanz beim Coaten.

Die insgesamt intensive jedoch synchrone Umwälzung eröffnet über die Prozessdauer die Möglichkeit alle Gutteilchen sehr gleichmäßig zu behandeln, so dass beispielsweise bei einer Granulierung eine extrem enge Korngrößenverteilungskurve entsteht, beim Coaten Schichtdicken in sehr engen Toleranzgrenzen.

Eine sehr intensive Umwälzung erlaubt zwar kürzere Behandlungszeiten, somit auch einen geringeren Energieaufwand, birgt aber zugleich die Gefahr, dass die Teilchen mehr oder weniger unkontrolliert aufeinandertreffen oder ungleichmäßig vom Behandlungsmedium besprüht werden, was das zuvor erwünschte Behandlungsergebnis negativ beeinflussen kann.

Aus der US 6,241,951 B1 ist eine Vorrichtung bekannt, deren ebener Boden mit mehreren Löchern versehen ist, die in einer Anordnung von mehreren konzentrischen Ringen aneinandergereiht sind.

Auf jedem Ring an aneinandergereihten Löchern ist eine umgekehrt-V-förmige Haube aus Doppelblechen angeordnet. Durch die Löcher tritt Prozessluft in vertikaler Richtung nach oben gerichtet durch und wird zwischen den Doppelblechen der Haube wieder nach unten Richtung Boden umgelenkt und tritt am bodenseitigen Ende der Haube aus. Damit soll ein Durchtreten von feinkörnigem Gut durch die Löcher hindurch vermieden werden.

Aus der DE 100 15 597 A1 ist eine Bodenplatte bekannt, in der zahlreiche radial gerichtete geradlinig verlaufende Schlitzöffnungen ausgespart sind. Die Schlitzöffnungen können auch gewellt oder gekrümmt verlaufen.

Es ist Aufgabe der vorliegenden Erfindung eine Vorrichtung der eingangs genannten Art mit einer Aufbruchzone strömungstechnisch dahingehend weiter zu optimieren, dass eine noch besser gerichtete Umwälzung unter Luftgleitschicht-Bedingungen stattfindet und demzufolge ein besseres Behandlungsergebnis erzielt werden kann.

Erfindungsgemäß wird die Aufgabe dadurch gelöst, dass die Schlitze, senkrecht auf den Boden gesehen, etwa tangential an die kreisförmige Aufbruchzone herangeführt sind.

Diese Maßnahme hat nun die folgenden Vorteile.

Bei der eingangs genannten Ausrichtung der Luftschlitze werden die radial auf die Aufbruchzone zu geführten Teilchen abrupt etwa um 90° vertikal nach oben umgelenkt.

Durch die nun tangentiale Heranführung der Teilchen an diese Aufbruchzone wird dieser Umlenkwinkel mehr oder weniger aufgelöst und die Produktteilchen werden der Luftmenge folgend relativ sanft nach oben abgelenkt. Durch die tangentiale Heranführung wird den Produktteilchen eine Drehbewegung um eine vertikale Achse auferlegt, die eine Dreh-Wirbelbildung im Produkt unmittelbar über der Aufbruchzone verursacht.

Eine solche Drehwirbelbildung kann beispielsweise ein Coatingergebnis zusätzlich positiv beeinflussen, in dem den zu behandelnden Feststoffförmlingen im Bereich der Applikation der flüssigen Überzugsmedien neben einer Taumelbewegung mit horizontaler Achse gleichzeitig auch eine Taumelbewegung mit vertikaler Achse auferlegt wird, ohne dass dadurch nennenswerte Friktionen, d.h. Materialreibungen entstehen. Diese zusätzlichen Taumelbewegungen entstehen in einem Bereich, in dem sich das Produkt in einer sehr aufgelockerten Phase befindet, d.h. es ist stark fluidisiert. Das bedeutet, dass die einzelnen Teilchen schon deutlich durch Lücken voneinander beabstandet sind. Dieser zusätzliche Taumeleffekt um die vertikale Achse der Teilchen, der sich, von oben auf das Produkt geschaut, ausschließlich oberhalb der kreismittigen Aufbruchzone als eine dicht an dicht in Reihe angeordnete horizontale Wirbelkette darstellt, kann beim Coaten die Möglichkeit von wesentlich größeren Feststoffförmlingen eröffnen. Auch bei Granulierprozessen kann sich das als hilfreich deswegen darstellen, da die Taumelbewegung in vertikaler und horizontaler Achse eine sphärische Formgebung der granulierten Teilchen fördert, wenn es sich um kleine Partikel, wie z.B. Pellets oder Granulate handelt.

Außerdem wurde festgestellt, dass beim Coaten beispielsweise von Tabletten eine noch homogenere Schichtdicke erzielt werden kann. Es entstehen somit beidseits der Aufbruchzone zwei, nahezu voneinander unabhängige spiralförmige Produkt-Schlingbewegungen innerhalb und außerhalb der kreismittigen vertikalen Aufbruchzone, die bei ihrem Zusammentreffen in einer Horizontalwirbelkette ineinander übergehen, d.h. sich miteinander vermischen, ohne nachteilige Friktionen zu erzeugen.

Somit wird die Aufgabe vollkommen gelöst.

In einer Ausgestaltung der Erfindung werden die Schlitze im radial äußeren Bereich und die Schlitze im radial inneren Bereich, in umfänglicher Richtung des Mittenkreises der Aufbruchzone gesehen, gleichsinnig etwa tangential an die kreisförmige Aufbruchzone herangeführt.

Bei dieser gleichsinnigen Heranführung an die Aufbruchzone tendieren die aufsteigenden Partikel nun dazu, in gleichsinnigen Wirbelketten über der Aufbruchzone sich weiter zu bewegen. Dies eröffnet eine besonders sanfte produktabriebarme Behandlung der Produktteilchen. Diese Ausgestaltung kann insbesondere bei gegenüber mechanischem Aufeinandertreffen kritischen Produkts herangezogen werden.

In einer anderen Ausgestaltung der Erfindung werden die Schlitze im radial äußeren Bereich und die Schlitze im radial inneren Bereich, in umfänglicher Richtung des Mittenkreises der Aufbruchzone gesehen, gegensinnig etwa tangential an die kreisförmige Aufbruchzone herangeführt.

Bei dieser Produktführung wurde festgestellt, dass eine noch weiter gesteigerte intensivierte taumelnde Produktbewegung erzeugt werden kann, die eine noch höhere und somit effektivere Behandlung erlaubt.

In einer weiteren Ausgestaltung der Erfindung sind die Schlitze im Boden als solche geschwungen.

Diese Maßnahme hat den Vorteil, dass die Schlitze über ihre gesamte Länge gesehen geschwungen sind, so dass sich die toroidal schwebenden und sich in umfänglicher Richtung bewegenden Ringe ergeben. Dies eröffnet die Möglichkeit, die Schlitze mit einer relativ geradlinigen radialen Erstreckung auszugestalten, um für die umfängliche Bewegungsrichtung zu sorgen, diese Krümmung ist dann in Richtung der Aufbruchzone entsprechend stärker ausgebildet, um die tangentiale Heranführung an die Aufbruchzone zu ermöglichen.

In einer weiteren Ausgestaltung der Erfindung sind die Schlitze geneigt im Boden ausgespart.

Diese Maßnahme hat den Vorteil, dass durch die im Boden ausgesparten geneigten Schlitze, sich je nach Neigungswinkel eine mehr oder weniger stark ausgeprägte horizontale Bewegungskomponente der Prozessluft ausbildet, was dazu beiträgt, unmittelbar über dem Boden ein Luftpolster auszubilden, auf dem der sich toroidal umwälzende Produktring dreht.

Es ist ja ein Bestreben, die umgewälzten Teile, die aufgrund der Schwerkraft wieder herabfallen und erneut einem Behandlungsprozess zugeführt werden, durch dieses Polster abzufedern und umzulenken, so dass hier in diesen Umlenkbereichen nicht die Gefahr besteht, dass die Gutteilchen beeinträchtigt werden.

Die zuvor erwähnten Maßnahmen der Variierung der Krümmung und der Neigung ist produktionstechnisch besonders einfach durchzuführen, wenn man die Schlitze in einem massiven Boden ausspart, beispielsweise durch Materialabtragung, sei es durch Lasern oder Wasserstrahlfräsung.

Dies eröffnet auch die Möglichkeit, für unterschiedliche Behandlungsmethoden an unterschiedliche Produktgrößen oder auch unterschiedliche Produktmengen entsprechend optimal anzupassen.

Andererseits eröffnet es auch zugleich die Möglichkeit, einen Art optimalen Mittelweg an Länge, Krümmung, Neigung und Schlitzbreite vorzusehen, um dann mit einem einzigen Boden durch Variierung beispielsweise des Parameters durchgeführte Prozessluftmenge variabel auf unterschiedliche Produktformen und spezifische Dichten, unterschiedliche Behandlungen und unterschiedliche Chargengrößen anzupassen.

In einer weiteren Ausgestaltung der Erfindung weisen die Schlitze in umfänglicher Richtung gesehen, etwa gleiche Abstände voneinander auf.

Diese Maßnahme hat den Vorteil, dass dadurch gleichmäßige und gut steuerbare Strömungsverhältnisse zur Ausbildung beispielsweise des produktbewegenden Luftpolsters ergriffen werden können.

Der umfängliche Abstand wird so gewählt, dass unabhängig, welches Produkt, welche Produktgröße und welche Chargengröße eingesetzt wird, auf jeden Fall eine solche Luftmenge hindurchgeführt werden kann, dass die Teilchen während des umfänglichen Überlaufens des Abstandes zwischen einem und einem nachfolgenden Schlitz nicht auf den Boden absinken. Andererseits eröffnet das, wie zuvor erwähnt, durch die Variationen des Parameter zugeführte Luftmenge bei unterschiedlichen Produktcharakteristiken oder Produktchargen sicherzustellen, dass immer genügend Luftmenge zwischen zwei umfänglich benachbarten aufeinanderfolgenden Schlitzen vorhanden ist, um ein stabiles Luftpolster sicherzustellen.

In einer weiteren Ausgestaltung weisen die Schlitze, in umfänglicher Richtung gesehen, etwa gleiche Schlitzbreiten auf.

Dies hat nicht nur fertigungstechnisch den Vorteil der einfachen Herstellung, sondern stellt auch sicher, dass bei bestimmten Prozessluftparametern entsprechend gleiche Luftmengen pro Längeneinheit durch jeden Schlitz hindurchtreten.

In einer weiteren Ausgestaltung der Erfindung weist der Boden eine erste Bodenplatte auf, in der die Schlitze durch Materialabtrag ausgespart sind.

Diese Maßnahme hat wie zuvor erwähnt den Vorteil, dass durch mechanisch relativ einfache und auch sehr genau zu steuernde Maßnahmen die Schlitze durch Materialabtrag in einer solchen Bodenplatte herstellbar sind.

In einer weiteren Ausgestaltung der Erfindung weist die Bodenplatte einen äußeren Ring auf, der den radial äußeren Bereich belegt und ferner ein radial inneres Teil, das den inneren Bereich belegt.

Der innere und der äußere Bereich des Bodens sind ja durch die kreisförmige Aufbruchzone voneinander getrennt.

Das eröffnet nun die Möglichkeit den Boden im Bereich der ersten Bodenplatte aus zwei Teilen herzustellen, nämlich einem äußeren Ring, der die Schlitze des äußeren Bereiches aufweist und ein inneres Teil, das die Schlitze des inneren Bereiches aufweist. Das innere Teil kann dabei als Platte oder auch wieder als Ring ausgebildet sein, je nachdem wie man die mittige zentrale Luftführung wünscht.

Dies eröffnet selbstverständlich auch die Möglichkeit, die Geometrie und die Charakteristik der Schlitze des äußeren Bereiches bzw. der des inneren Bereiches bei der Herstellung unterschiedlich auszugestalten.

Insbesondere ist dadurch besonders einfach die Variation der tangentialen Ausrichtung möglich, indem die Ringe so ausgestaltet werden, dass die Schlitze entweder gleichsinnig oder gegensinnig der kreisförmigen Aufbruchzone zugeführt werden.

Das hat auch den Vorteil, dass in einer Vorrichtung beispielsweise der äußere Ring unverändert bleiben kann, und je nachdem, wie man das Lochbild der Schlitze des inneren Teils ausbildet, ein inneres Bodenteil zur Verfügung hat, mit dem die gleichsinnig tangentiale oder ein anderes mit der Möglichkeit der gegensinnig tangentialen Heranführung zur Verfügung steht.

Es ist einleuchtend, dass solche Teile einfach auswechselbar sind, so dass sehr flexibel auf unterschiedliche Produkte angepasst werden kann.

In einer weiteren Ausgestaltung der Erfindung ist in der Aufbruchzone eine Ringspaltdüse angeordnet.

Diese an sich bekannte Maßnahme hat den Vorteil, dass gezielt in der Aufbruchzone Behandlungen wie Granulieren und Coaten mit einer solchen Ringspaltdüse durchgeführt werden kann. Bei einem vertikal nach oben gerichteten Ringspalt kann das Behandlungsmedium exakt zwischen die beidseitig auf die Aufbruchzone zu bewegten Produktteilchen, sei es tangential gleichsinnig oder tangential gegensinnig, gesprüht und somit sehr gleichmäßig auf die verwirbelten Teilchen beim vertikalen Ablenken aufgebracht werden.

In einer weiteren Ausgestaltung der Erfindung ist im Abstand zur ersten Bodenplatte anströmseitig eine zweite Bodenplatte angeordnet, die an die erste Bodenplatte anströmseitig heranbewegbar ist und in diesem Zustand die Schlitze der ersten Bodenplatte verschließt.

Diese Maßnahme hat den Vorteil, bei der Behandlung von sehr feinkörnigem Gut, dessen Korngröße kleiner ist als die Schlitzbreite sicherzustellen, dass keine Gutteilchen durch die Schlitze und somit durch den Boden hindurchfallen.

Insbesondere im pharmazeutischen Bereich, bei dem oftmals sehr feinstäubige Pulver verarbeitet werden, ist es aus Hygiene- und Sicherheitsvorschriften unerwünscht, dass überhaupt Produktteilchen durch den Boden hindurchtreten können und sich irgendwo im anströmseitigen Bereich des Bodens vorhandenen Luftzuführung festsetzen. Dies würde einen sehr erheblichen Aufwand bei der Reinigung bedeuten.

Durch das Vorsehen der zweiten Bodenplatte anströmseitig zur ersten Bodenplatte, ist es möglich, im Betrieb permanent Prozessluft durch die Schlitze der ersten Bodenplatte hindurchzuführen, somit die Gutteilchen permanent umgewälzt beflutet über der oberen Seite der ersten Bodenplatte zu halten. Soll ein Vorgang beendet werden, wird die zweite Bodenplatte, unter Aufrechterhaltung der Luftdurchführung durch die erste Bodenplatte, an diese herangefahren, bis diese dann die Schlitze verschließt, so dass die Gutteilchen allenfalls in die Schlitze der ersten Bodenplatte hinein, aber niemals durch diese hindurchfallen können.

In einer weiteren Ausgestaltung der Erfindung sind in der zweiten Bodenplatte Öffnungen vorhanden, durch die Prozessluft an die Unterseite der ersten Bodenplatte führbar ist.

Diese Maßnahme hat den Vorteil, dass durch die Öffnungen gezielt Prozessluft zur Unterseite der ersten Bodenplatte führbar ist, so dass auch beim Annähern, oder bei dem Wegbewegen zum Anfahren der Vorrichtung immer sichergestellt ist, dass durch die Prozessluft verhindert wird, dass auch feinstäubige Produkte durch die Schlitze in der ersten Platte hindurchtreten können. Somit wird diesem Erfordernis, insbesondere in der pharmazeutischen Industrie Genüge getan.

In einer weiteren Ausgestaltung der Erfindung sind die Öffnungen in der zweiten Bodenplatte als Schlitze ausgebildet, deren Schlitzbild der ersten Bodenplatte entspricht, wobei die zweite Bodenplatte im an die Unterseite der ersten Bodenplatte heranbewegten Zustand umfänglich so versetzt ist, dass die Schlitze der ersten Bodenplatte durch Materialbrücken zwischen den Schlitzen der zweiten Bodenplatte abgedeckt sind.

Diese Maßnahme hat nun mehrere Vorteile.

Dadurch, dass das Schlitzbild in der zweiten Bodenplatte dem Schlitzbild der ersten Bodenplatte entspricht, können im Betrieb, bei dem die zweite Bodenplatte von der Unterseite der ersten Bodenplatte wegbewegt ist, die Schlitze der ersten Bodenplatte gezielt angeströmt bzw. angeblasen werden. Dies deswegen, da schon ein entsprechendes Anblasströmbild durch die Schlitze in der unteren Platte gebildet wird. Da es eine Funktion dieser unteren zweiten Bodenplatte ist, die Schlitze der ersten oberen Bodenplatte sicher vollständig zu verschließen, ist die zweite Bodenplatte entweder von vornherein etwas umfänglich versetzt, oder beim Heranbewegen an die Unterseite wird diese etwas gedreht, wodurch dieser umfängliche Versatz erzielt wird.

In einer weiteren Ausgestaltung der Erfindung sind die Schlitze in der zweiten Bodenplatte breiter als die Schlitze in der ersten Bodenplatte.

Diese Maßnahme hat den Vorteil, dass die Prozessluft durch die breiteren Schlitze der zweiten unteren Bodenplatte relativ widerstandsarm hindurch und in den Raum unter der ersten Bodenplatte hineingeführt werden kann, allerdings nach wie vor zielgerichtet aufgrund der vergleichbaren Schlitzbilder.

In einer weiteren Ausgestaltung der Erfindung verlaufen die Schlitze in der zweiten Bodenplatte exakt senkrecht zur Plattenfläche, somit ungeneigt.

Diese Maßnahme hat nicht nur den Vorteil einer fertigungstechnisch wesentlich einfachen Herstellung dieser Schlitze, ggf. durch Stanzen, sondern durch diese ungeneigte Anordnung kann die jeweilige Unterseite des geneigten Schlitzes in der ersten Bodenplatte besonders genau gezielt angeblasen werden.

In einer weiteren Ausgestaltung der Erfindung ist unter dem Boden ein Windhaus angeordnet, das eine mit Prozessluft beaufschlagbare erste Kammer aufweist, die die Schlitze im radial äußeren Bereich mit Prozessluft versorgt, und dass ferner eine mit Prozessluft beaufschlagbare zweite Kammer vorgesehen ist, aus der die Schlitze in dem radial inneren Bereich mit Prozessluft beaufschlagt werden.

Diese Ausgestaltung erlaubt ausgehend von ein und derselben Prozessluftquelle nun individuell auf die Geometrie, die Anzahl und die Größe der Schlitze bzw. der zu durchströmenden Querschnitte anzupassen.

Liegt die Aufbruchzone in etwa radial mittig im Boden, sind im radial äußeren Bereich wesentlich mehr Schlitze vorhanden, da umfänglich gesehen ein wesentlich längerer Weg herrscht, wobei hier insbesondere zu beachten ist, dass der sich toroidal umwälzende Ring auf einem Luftpolster schweben soll.

Es kann zwar die Anzahl der tangential an die Aufbruchzone herangeführten Schlitze des äußeren Bereiches und des inneren Bereiches gleich sein, um jeweils die zuvor gewünschten genau regulierbaren und kontrollierbaren Verwirbelungen zu erzielen.

Aufgrund des größeren Umfanges der äußeren Ringplatte kann es aber notwendig sein, zwischen zwei benachbarten tangential an die Aufbruchzone herangeführten Schlitzen zumindest im radial äußeren Bereich einen weiteren ggf. kürzeren Schlitz vorzusehen, der schlicht und einfach dafür zu sorgen hat, dass genügend Prozessluftmenge zur Aufrechterhaltung des Luftpolsters auf dem Boden zugeführt werden kann. Auch das zeigt wieder die hohe Variabilität der Vorrichtung.

In einer weiteren Ausgestaltung ist vorgesehen, dass eine dritte Kammer im Windhaus vorgesehen ist, über die die Aufbruchzone mit Prozessluft versorgbar ist.

Diese Maßnahme stellt eine vorteilhafte Weiterentwicklung dahingehend dar, dass nun wiederum ausgehend von ein und derselben Prozessluftquelle, nun auch noch individuell der Aufbruchzone Prozessluft zugeführt werden kann.

Es versteht sich, dass die vorstehend genannten Merkmale und die nachstehend noch zu erläuternden Merkmale nicht nur in den angegebenen Kombinationen sondern auch in anderen Kombinationen einsetzbar sind, ohne den Rahmen der vorliegenden Erfindung zu verlassen.

Die Erfindung wird nachfolgend anhand der beiliegenden Zeichnungen näher beschrieben und erläutert. Es zeigen:
Fig. 1 eine Draufsicht auf ein erstes Ausführungsbeispiel eines Bodens einer erfindungsgemäßen Vorrichtung mit gleichsinniger, etwa tangentialer Heranführung der Schlitze an die Aufbruchzone,
Fig. 2 eine entsprechende Darstellung eines Bodens mit gegensinniger, etwa tangentialer Heranführung an die Aufbruchzone,
Fig. 3 eine perspektivische Darstellung des Bodens von Fig. 2,
Fig. 4 eine perspektivische Darstellung des Bodens von Fig. 1, wobei dargestellt ist, dass anströmseitig im Abstand eine zweite Bodenplatte darunter angeordnet ist,
Fig. 5 einen Zustand, bei dem die zweite Bodenplatte an die Unterseite der oberen ersten Bodenplatte herangefahren ist und dabei deren Schlitze verschließt,
Fig. 6 einen Schnitt längs der Linie VI-VI in Fig. 5 im Betrieb mit den Strömungsbildern bzw. Produktbewegungen, wobei die zweite Bodenplatte etwas abgesenkt ist,
Fig. 7 eine der Fig. 1 vergleichbare Darstellung im Betrieb zur Erläuterung der Strömungsbilder bzw. der Produktbewegungen,
Fig. 8 eine der Fig. 4 vergleichbare Darstellung im Betrieb,
Fig. 9 eine der Fig. 6 entsprechende Darstellung mit einem mittig eingesetzten Konus,
Fig. 10 einen Vertikalschnitt einer Vorrichtung, in der ein erfindungsgemäßer Boden bestehend aus zwei Bodenplatten eingesetzt ist und zwar mit an die Unterseite der ersten Bodenplatte herangefahrenen unteren zweiten Bodenplatte,
Fig. 11 eine der Darstellung von Fig. 10 vergleichbare Darstellung, wobei die einfache Zerlegbarkeit und der Aufbau des Windhauses unterhalb des Bodens dargestellt ist;
Fig. 12 einen Querschnitt durch ein Zuluftwindhaus einer erfindungsgemäßen Vorrichtung mit gegensinniger Zuführung der Schlitze zur Aufbruchzone, und
Fig. 13 eine der Fig. 12 entsprechende Darstellung bei einer Vorrichtung mit gleichsinnig tangentialer Ausrichtung der Schlitze.

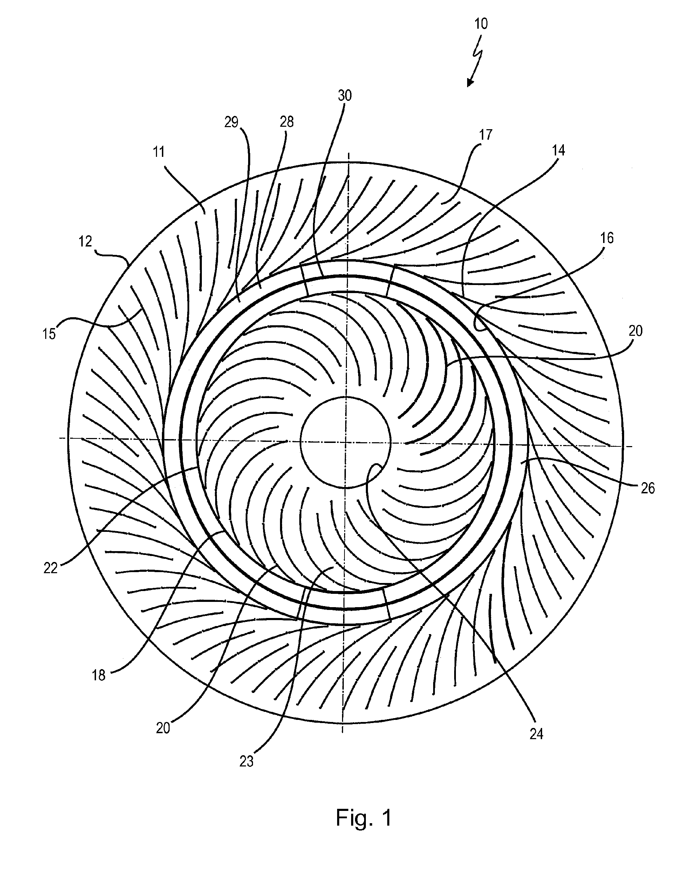

In Fig. 1 ist eine Draufsicht auf ein erstes Ausführungsbeispiel eines Bodens einer erfindungsgemäßen Vorrichtung dargestellt.

Der Boden ist in seiner Gesamtheit mit der Bezugsziffer 10 bezeichnet.

Der Boden 10 weist eine erste ebene Bodenplatte 11 auf, die einen äußeren ersten ebenen Metallring 12 aufweist.

In diesen Ring 12 sind eine Vielzahl an Schlitzen 14 durch Laserschneiden ausgenommen. Es ist ersichtlich, dass eine Vielzahl an gleichsinnig ausgestalteten relativ langen Schlitzen 14 sowie jeweils dazwischen angeordnet eine entsprechende Anzahl an kürzeren Schlitzen 15 vorgesehen sind.

Die längeren Schlitze 14 erstrecken sich von einem hier nicht näher bezeichneten äußeren Rand des Ringes 12 bis zu dessen innerem Rand 16. Dabei ist die Linienführung der Schlitze 14 in Längserstreckung gesehen, also grob in radialer Erstreckung so, dass diese zunächst nur leicht gekrümmt verlaufen und dann mit zunehmender Krümmung etwa tangential an den inneren Rand 16 herangeführt sind. Umfänglich gesehen weisen alle Schlitze 14 bzw. 15 einen konstanten Abstand voneinander auf. Der Abstand zwischen zwei benachbarten Schlitzen in umfänglicher Richtung beträgt etwa 50 mm, die Breiten der Spalte 14 und 15 liegen im Bereich von 1,0 - 1,5 mm.

Der äußere Ring 12 stellt somit einen äußeren Bereich 17 des Bodens 10 dar.

Der Boden 10 bzw. die erste obere Bodenplatte 11 besteht noch aus einem zweiten Teil, im dargestellten Ausführungsbeispiel einem inneren Ring 18, der ebenfalls aus einer ebenen Metallplatte besteht, in dem eine Vielzahl an Schlitzen 20 ausgespart sind, wobei dies ebenfalls durch eine Laserbehandlung erfolgt ist. Die Schlitze 20 erstrecken sich ausgehend von einer zentralen runden Öffnung 24, etwas im Abstand von dieser in geschwungener Führung in radialer Richtung nach außen und sind ebenfalls etwa tangential zu einem äußeren Rand 22 des Ringes 18 geführt. Es ist zu erkennen, dass die Schlitze 20 alternierend einmal etwas weiter, einmal etwas weniger an die mittige Öffnung 24 heranreichen.

Somit existiert zwischen dem äußeren Ring 12 und dem inneren Ring 18 ein freier Raum, wobei dieser die sogenannte Aufbruchszone darstellt.

Im dargestellten Ausführungsbeispiel ist die Aufbruchszone 26 als ringförmige Ring-Spaltdüse 28 abgebildet, die einen ringförmigen, nach oben mündenden Ringspalt 30 aufweist, der etwa mittig zentrisch in der Aufbruchszone 26 liegt.

Es ist auch vorgesehen, im ringförmigen Bereich der Aufbruchszone 26 zwei sich radial gegenüberstehende 3 Stoff Linearsprühdüsen oder bei kleineren Laborgeräten, zwei 3-Stoff-Rundstrahlsprühdüsen einzusetzen.

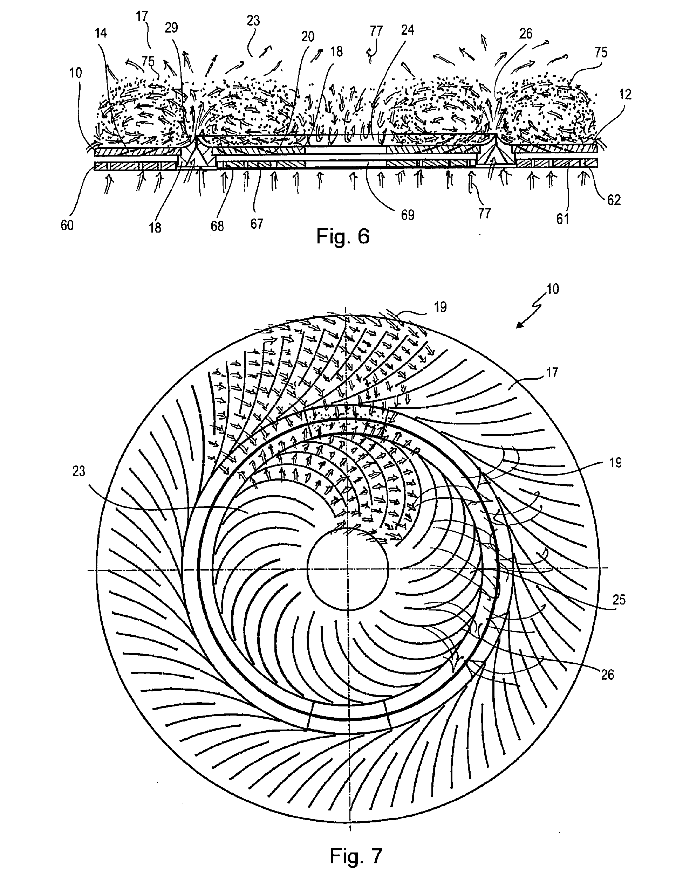

Die Ringspaltdüse 28 weist, wie das insbesondere aus Fig. 6 ersichtlich ist, eine Art Pagodendach 29 auf. Dieses Pagodendach 29 fördert die sanfte Umlenkung der nachher noch zu beschreibenden zunächst horizontal gerichteten Strömung in der Aufbruchzone.

Der Ring 18 belegt oder stellt einen inneren Bereich 23 des Bodens 10 bzw. der ersten Bodenplatte 11 dar.

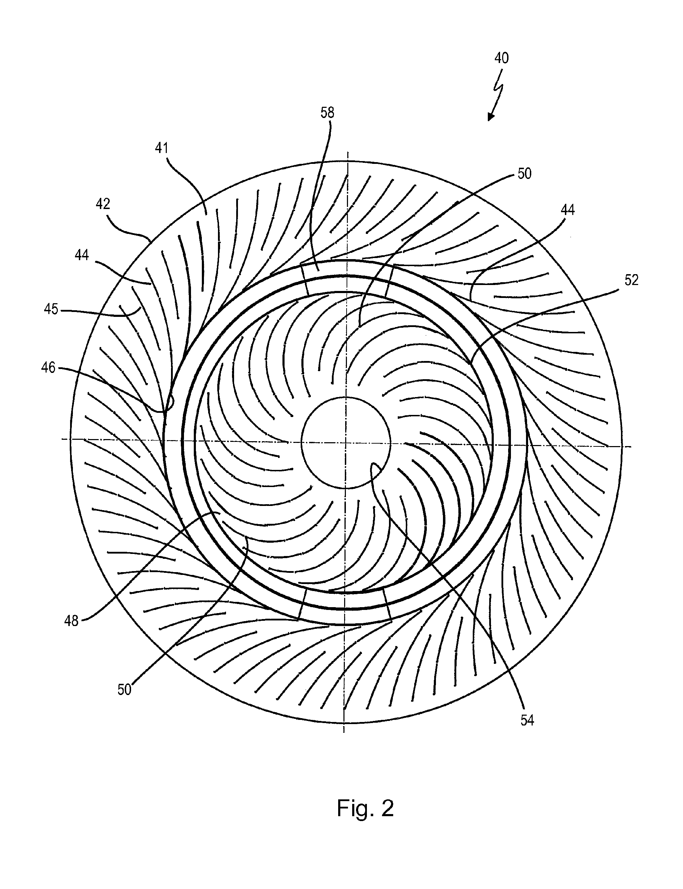

In Fig. 2 ist eine entsprechende Draufsicht auf ein anderes Ausführungsbeispiel eines Bodens 40 dargestellt, der ähnlich aufgebaut ist wie der in Fig. 1 dargestellt Boden 10.

Auch der Boden 40 weist eine erste obere Bodenplatte 41 auf, die in der Draufsicht von Fig. 2 ersichtlich ist, die einen äußeren Ring 42 aufweist. In dem Ring 42 sind wie zuvor in Zusammenhang mit dem Ring 12 beschrieben, Schlitze 44 ausgespart, die zu dem inneren Rand 46 tangential geführt sind. Auch hier sind wieder kürzere Schlitze 45 vorgesehen.

In anderen Worten ausgedrückt ist der Ring 42 gleich wie der Ring 12 ausgebildet.

Der in Fig. 2 ausgebildete innere Ring 48 ist ebenfalls ähnlich wie der innere Ring des zuvor gezeigten Ausführungsbeispieles ausgebildet, nur sind die Schlitze 50 so ausgerichtet, dass diese gegensinnig zu den Schlitzen 44 etwa tangential zum äußeren Rand 52 geführt sind. Auch der Ring 48 weist eine zentrale Öffnung 54 auf. Dadurch entsteht wieder eine ringförmige Aufbruchzone 56, in der, wie zuvor beschrieben, eine Ringspaltdüse 58 eingesetzt ist.

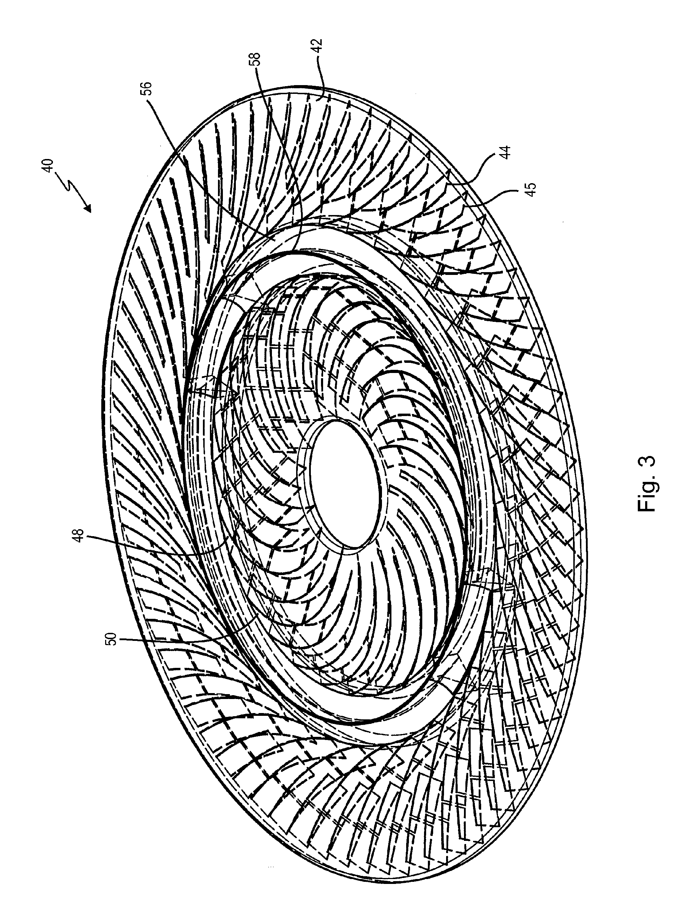

Aus der perspektivischen und "gläsernen" Darstellung von Fig. 3 ist ersichtlich, dass die Schlitze 44 und 45 des äußeren Ringes 42 sowie die Schlitze 50 des inneren Ringes 48 zur jeweiligen Ringebene geneigt verlaufen, und zwar etwa um 30° zur Senkrechten geneigt. Dadurch wird der Prozessluft, die durch die Schlitze hindurchströmt, eine umfängliche bzw. horizontal gerichtete Bewegungskomponente auferlegt, was zur Ausbildung des bereits mehrfach erwähnten Luftpolsters förderlich ist.

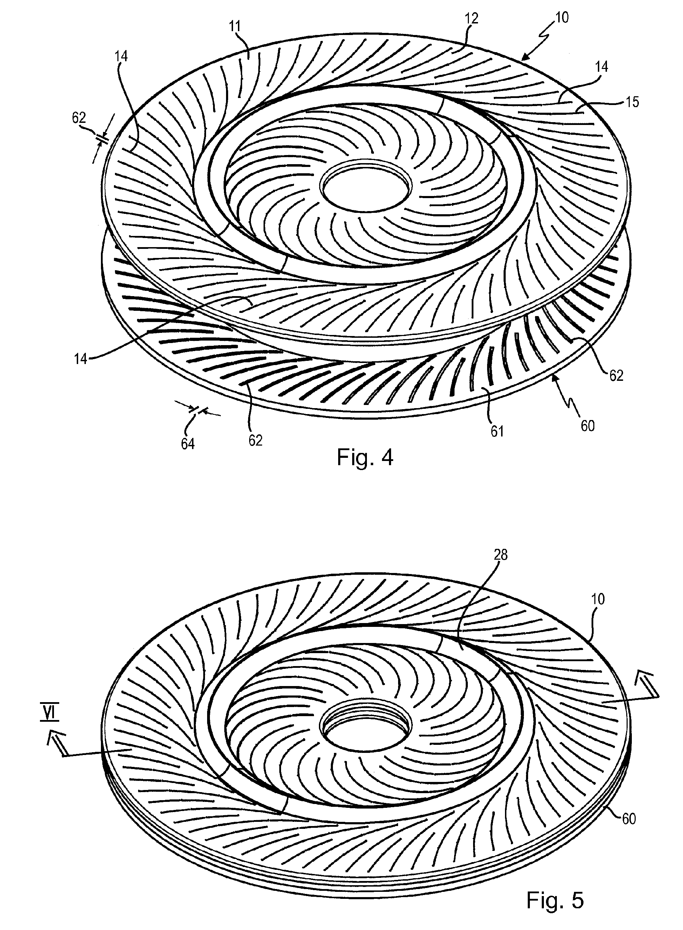

Aus der Darstellung von Fig. 4 und 5 ist zu erkennen, dass unter der ersten Bodenplatte 11 (dasselbe gilt auch für die erste Bodenplatte 41 des Bodens 40) im Abstand und anströmseitig eine zweite Bodenplatte 60 angeordnet ist. Auch diese zweite Bodenplatte 60 weist einen äußeren Metallring 61 auf, in dem Schlitze 62 ausgespart sind. Das Schlitzbild der Schlitze 62 ist gleich wie das Schlitzbild der Schlitze 14 und 15 in der ersten oberen Bodenplatte 11.

Allerdings ist die Breite 64 der Schlitze 62 wesentlich größer, etwa 3 mm als die Breite 62 der Schlitze 14 und 15, die ja wie zuvor beschrieben, etwa 1,0 - 1,5 mm beträgt.

Auch die zweite Bodenplatte 60 weist einen inneren Ring 67 auf (siehe Fig. 6) der Schlitze 68 aufweist, deren Schlitzbild dem der Schlitze des inneren Ringes 48 bzw. 18 des Bodens 40 bzw. 10 entspricht.

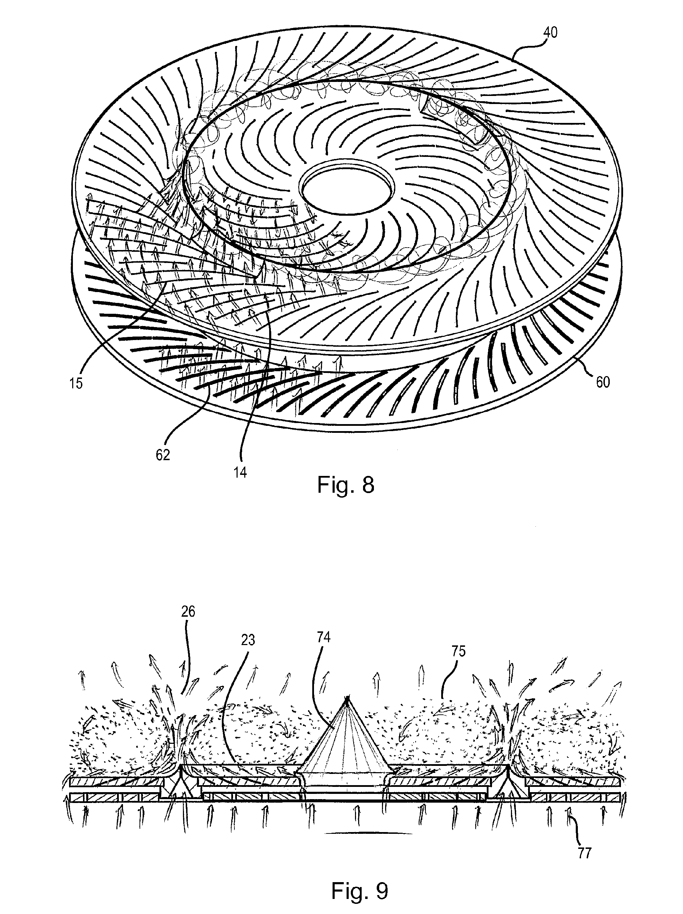

Wie aus der Schnittdarstellung von Fig. 6 zu erkennen, sind allerdings die Schlitze 62 nicht geneigt, sondern verlaufen vertikal durch die Bodenplatte 60 hindurch. Im Betrieb liegt die zweite Bodenplatte 60 etwas im Abstand zur Unterseite der ersten Bodenplatte 41, wie das aus den Schnittdarstellungen von Fig. 6 und 9 ersichtlich ist, in Fig. 4 ist zur Deutlichmachung der konstruktiven Ausgestaltung dieser Abstand größer dargestellt. Wird die untere zweite Bodenplatte 60 ganz an die Unterseite der oberen ersten Bodenplatte 41 bzw. 11 herangefahren, wie das beispielsweise in Fig. 5 dargestellt ist, verschließt die zweite Bodenplatte 60 die Schlitze in der jeweils oberen ersten Bodenplatte 41 bzw. 11.

Dazu ist das Schlitzbild der zweiten Bodenplatte 60 um einen halben Abstand zwischen den Schlitzen in der oberen ersten Bodenplatte 41 bzw. 11 umfänglich versetzt, so dass dann die Materialbrücken zwischen den Schlitzen 62 in der unteren zweiten Bodenplatte 60 an der Unterseite der Schlitze in der oberen ersten Bodenplatte 11, 41 zum Liegen kommen und diese dabei verschließen.

Im Betrieb, wie das insbesondere in den Fig. 6 bis 9 dargestellt ist, wird Prozessluft 77 an die Unterseite der zweiten Bodenplatte 60 herangeführt, tritt durch deren vertikal ausgerichteten Schlitze 62 hindurch und strömt dann die Unterseite bzw. die untere Eintrittsöffnung der geneigten Schlitze in der ersten Bodenplatte 41 bzw. 11 an. Da diese Schlitze ja geneigt verlaufen, wird der Prozessluft auch eine Bewegungskomponente in horizontaler Richtung auferlegt, die für die Ausbildung eines Luftpolsters sorgen.

Das auf der Oberseite des Bodens 10 bzw. 40 liegende Gut 75 wird durch die Prozessluft 77 entsprechend bewegt und umgewälzt. Bei der tangential gleichsinnigen Heranführung der Schlitze an die Aufbruchzone 26, wie das in Fig. 7 dargestellt ist, werden dann die Gutteilchen vertikal nach oben abgelenkt, wie das aus Fig. 6 ersichtlich ist. Da in der Aufbruchzone 26 die Ringspaltdüse 28 sitzt, kann durch diese den verwirbelnden Gutteilchen 75 ein Behandlungsmedium auferlegt werden.

Wie das insbesondere aus dem Strömungsbild von Fig. 6 ersichtlich ist, bewegen sich die Gutteilchen 75 alsbald nach dem Aufsteigen über die Aufbruchzone 26 voneinander weg, also entweder radial nach innen bzw. radial nach außen und je nach Ausrichtung der tangentialen Heranführung werden diese Gutteilchen noch mit einer zusätzlichen Verwirbelungskomponente verwirbelt, wie eingangs beschrieben. Die Prozessluft 77 tritt aus den verwirbelten Gutteilchen heraus und verlässt die Apparatur am oberen Ende über einen hier nicht näher gezeigten Auslass, wie das an sich bekannt ist.

Die verwirbelten Gutteilchen fallen dann aufgrund der Schwerkraft wieder in Richtung des Bodens 40 bzw. 10 zurück und werden durch die durch die Schlitze hindurchtretende Prozessluft wieder in Richtung der Aufbruchzone 26 bewegt. Insgesamt gesehen entstehen zwei Ringe an verwirbelten Gutteilchen, die sich aufgrund der umfänglichen Bewegungskomponente durch die gekrümmten Schlitze noch zusätzlich drehen, so dass sich eine toroidal umwälzende Ringbewegung sowohl der Gutteilchen im äußeren Bereich 17 als auch im inneren Bereich 23 ergibt, wie das insbesondere aus Fig. 6 ersichtlich ist.

Wie in Fig. 9 dargestellt, kann in die mittige zentrale Öffnung ein Konus 74 eingesetzt sein, der die radial inneren herabfallenden Gutteilchen 75 sanft ablenkend wieder dem inneren Bereich 23 zuführt, wo sie dann wieder von durchtretender Prozessluft beschleunigt und radial nach außen zur Aufbruchzone 26 hin bewegt werden, um einem erneuten Behandlungszyklus unterworfen zu werden.

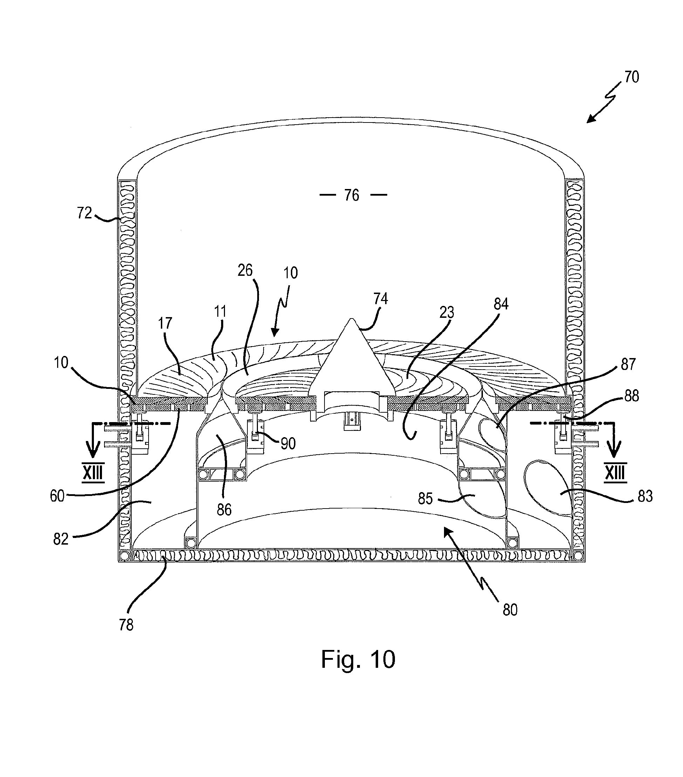

In Fig. 10 ist stark schematisiert ein Vertikalschnitt einer Vorrichtung 70 dargestellt, die ein hohlzylindrisch doppelwandiges äußeres Gehäuse 72 aufweist. Im Gehäuse 72 ist der Boden 10 eingesetzt, der aus der oberen ersten Bodenplatte 11, sowie der an deren Unterseite anliegenden zweiten Bodenplatte 60 aufgebaut ist. Mittig ist der Konus 74 eingesetzt.

Bodenseitig ist das Gehäuse 72 über eine abnehmbare Grundplatte 78 verschlossen.

Dieser Bereich unter dem Boden 10 stellt ein sogenanntes Windhaus 80 dar.

Das Windhaus 80 ist so aufgebaut, dass eine erste Kammer 82 vorhanden ist, die über einen Anschluss 83 von der Außenseite her mit Prozessluft 77 versorgt werden kann. Über die ersten Kammer 82 wird der äußere Bereich 17 des Bodens 10 mit Prozessluft 77 versorgt.

Eine zweite Kammer 84 ist dazu vorgesehen, den inneren Bereich 23 des Bodens 10 mit Prozessluft 77 zu versorgen, wobei die zweite Kammer 82 durch einen Anschluss 83 gespeist wird. Die erste Kammer 82 ist dabei hermetisch von der zweiten Kammer 84 getrennt, was durch entsprechend hier nicht näher bezeichnete umlaufende Ringwände erfolgt.

Es ist außerdem eine dritte Kammer 86 vorhanden, die über einen Anschluss 87 mit Prozessluft versorgt wird. Die dritte Kammer 86 dient dazu, den Boden 10 im Bereich der Aufbruchzone 26 mit Prozessluft zu versorgen.

Dies eröffnet durch konstruktiv einfache Mittel, die unterschiedlichen Bereiche des Bodens individuell mit entsprechend geeigneten Prozessluftmengen zu versorgen, wobei die Prozessluft aus ein und derselben hier nicht näher dargestellten Quelle stammen kann.

Die Oberseite des Gehäuses 72 ist mit einem hier nicht näher dargestellten Deckel verschlossen, der dann die entsprechende Auslässe für die Prozessluft aufweist. Der Bereich unter dem hier nicht näher dargestellten Deckel und über dem Boden 10 stellt somit die eigentliche Prozesskammer 76 dar, in der das zu behandelnde Gut 75 aufgenommen, bewegt und behandelt wird. Das Gut 75 kann dann entweder durch Kippen der Vorrichtung über den geöffneten Deckel entleert oder eingeführt werden, es können aber auch entsprechende Zuführ- und Abführvorrichtungen vorgesehen sein.

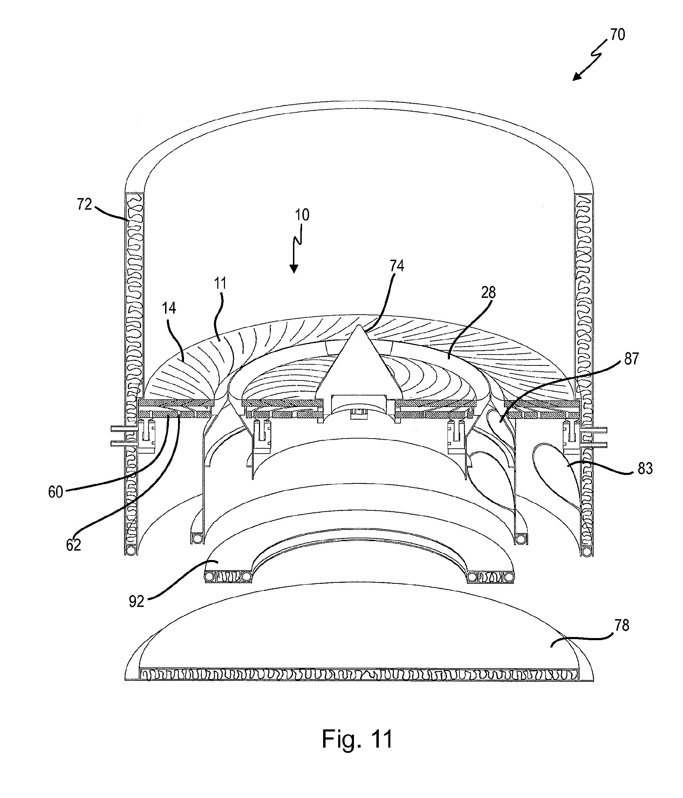

In Fig. 10 ist dargestellt, dass die untere Bodenplatte 60 über Zylinder 88 bzw. 90 vertikal bewegbar ist, wobei in Fig. 11 der etwas abgesenkte Zustand dargestellt ist.

Aus der Explosionsdarstellung von Fig. 11 ist zu erkennen, dass durch Vorsehen von einfachen Zwischenplatten 92 bzw. hier nicht näher dargestellten umfänglichen stehenden Wänden die drei Kammern 82, 84 und 86 ausgebildet bzw. voneinander getrennt werden können. Die Montage und Demontage ist dementsprechend sehr einfach zuzuführen, so dass entweder zum Reinigen die Vorrichtung einfach zerlegt werden kann oder beispielsweise um gewisse Bauteile der Böden auszutauschen, beispielsweise um den in Fig. 1 gezeigten Boden, durch den in Fig. 2 gezeigten Boden zu ersetzen.

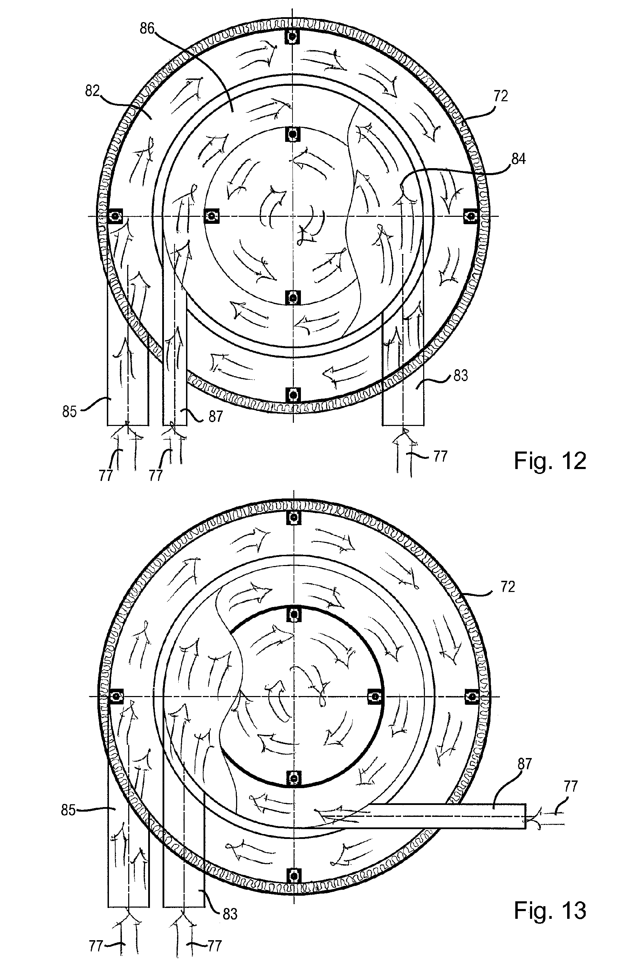

In den Fig. 12 und 13 sind noch Querschnitte durch die entsprechenden Windhäuser von weiteren Ausführungsbeispielen ersichtlich, aus denen die Strömungsführung zur Anströmung der ersten, zweiten und dritten Kammern 82, 84 und 86 ersichtlich sind.

Bei Fig. 12 ist ein Windhaus gezeigt, das einen Boden wie in Fig. 2 zeigt, also mit gegensinnig geführten tangential an die Aufbruchzone herangeführten Schlitzen.

Fig. 13 entspricht einer Luftführung für einen Boden, wie er in Fig. 1 dargestellt ist.

## Patentansprüche

1. Vorrichtung zum Behandeln von partikelförmigem Gut (75), mit einer Prozesskammer (76) zum Aufnehmen und Behandeln des Guts (75), wobei ein Boden (10, 40) der Prozesskammer (76) Schlitze (14, 20; 44, 50) aufweist, über die Prozessluft (70) mit einer horizontalen Bewegungskomponente in die Prozesskammer (76) einführbar ist, wobei die Schlitze (14, 20; 44, 50) derart ausgerichtet sind, dass in einem radial äußeren Bereich (17) eine erste Strömung (19) entsteht, die eine von außen nach innen gerichtete Bewegungskomponente aufweist, und dass in einem radial inneren Bereich (23) eine zweite Strömung (25) entsteht, die eine von innen nach außen gerichtete Strömungskomponente aufweist, wobei die beiden oppositären Strömungen (19, 25) längs einer kreisförmigen Aufbruchzone (26, 56) aufeinandertreffen, **dadurch gekennzeichnet, dass** die Schlitze (14, 20; 44, 50), senkrecht auf den Boden (10, 40) gesehen, etwa tangential an die kreisförmige Aufbruchzone (26, 56) herangeführt sind.

2. Vorrichtung nach Anspruch 1, **dadurch gekennzeichnet, dass** die Schlitze (14) im radial äußeren Bereich (17) und die Schlitze (20) im radial inneren Bereich (23), in umfänglicher Richtung der Aufbruchzone (26) gesehen, gleichsinnig etwa tangential an die kreisförmige Aufbruchzone (26) herangeführt sind.

3. Vorrichtung nach Anspruch 1, **dadurch gekennzeichnet, dass** die Schlitze (44) im radial äußeren Bereich und die Schlitze (50) im radial inneren Bereich, in umfänglicher Richtung der Aufbruchzone (56) gesehen, gegensinnig etwa tangential an die kreisförmige Aufbruchzone (56) herangeführt sind.

4. Vorrichtung nach einem der Ansprüche 1 bis 3, **dadurch gekennzeichnet, dass** die Schlitze (14, 20; 44, 50) als solche geschwungen sind.

5. Vorrichtung nach einem der Ansprüche 1 bis 4, **dadurch gekennzeichnet, dass** eine Krümmung der Schlitze (14, 20; 44, 50) um so stärker wird, je mehr diese sich der Aufbruchzone (26, 56) nähern.

6. Vorrichtung nach einem der Ansprüche 1 bis 5, **dadurch gekennzeichnet, dass** die Schlitze (14, 20; 44, 50) geneigt im Boden (10, 40) ausgespart sind.

7. Vorrichtung nach einem der Ansprüche 1 bis 6, **dadurch gekennzeichnet, dass** die Schlitze (14, 20; 44, 50) in umfänglicher Richtung gesehen, etwa gleiche Abstände voneinander aufweisen.

8. Vorrichtung nach einem der Ansprüche 1 bis 7, **dadurch gekennzeichnet, dass** die Schlitze (14, 20; 44, 50) in umfänglicher Richtung gesehen, etwa gleiche Schlitzbreiten (62) aufweisen.

9. Vorrichtung nach einem der Ansprüche 1 bis 8, **dadurch gekennzeichnet, dass** der Boden (10, 20) eine erste Bodenplatte (11, 41) aufweist, in der die Schlitze (14, 44) durch Materialabtrag ausgespart sind.

10. Vorrichtung nach Anspruch 9, **dadurch gekennzeichnet, dass** die erste Bodenplatte (11, 41) einen äußeren Ring (12; 42) aufweist, der den radial äußeren Bereich (17) belegt und ferner ein radial inneres Teil (18, 52 ) aufweist, das den radial inneren Bereich (23) belegt, wobei zwischen diesen beiden Bereichen die Aufbruchzone (26, 56) liegt.

11. Vorrichtung nach einem der Ansprüche 1 bis 10, **dadurch gekennzeichnet, dass** in der Aufbruchzone (26, 56) eine Ringspaltdüse (28, 58) angeordnet ist.

12. Vorrichtung nach einem der Ansprüche 1 bis 11, **dadurch gekennzeichnet, dass** im Abstand zur ersten Bodenplatte (11, 41) anströmseitig eine zweite Bodenplatte (60) angeordnet ist, die an die erste Bodenplatte (11, 41) anströmseitig heranbewegbar ist und diesem Zustand die Schlitze (14, 20; 44, 50) der ersten Bodenplatte (11, 41) verschließt.

13. Vorrichtung nach Anspruch 12, **dadurch gekennzeichnet, dass** in der zweiten Bodenplatte (60) Öffnungen vorhanden sind, durch die Prozessluft (77) an die Unterseite der ersten Bodenplatte (11, 41) führbar ist.

14. Vorrichtung nach Anspruch 13, **dadurch gekennzeichnet, dass** die Öffnungen in der zweiten Bodenplatte (60) als Schlitze (62) ausgebildet sind, deren Schlitzbild dem Schlitzbild der Schlitze der ersten Bodenplatte (11, 41) entspricht, wobei die zweite Bodenplatte (60), im an die Unterseite der ersten Bodenplatte (11, 41) heranbewegten Zustand umfänglich so versetzt ist, dass die Schlitze der ersten Bodenplatte (11, 41) durch Materialbrücken zwischen den Schlitzen (62) der zweiten Bodenplatte (60) abgedeckt sind.

15. Vorrichtung nach Anspruch 14, **dadurch gekennzeichnet, dass** die Schlitze (62) in der zweiten Bodenplatte (60) breiter sind als die Schlitze in der ersten Bodenplatte (11, 41).

16. Vorrichtung nach Anspruch 14 oder 15, **dadurch gekennzeichnet, dass** die Schlitze (62) in der zweiten Bodenplatte (60) exakt senkrecht zur Plattenfläche, somit ungeneigt verlaufen.

17. Vorrichtung nach einem der Ansprüche 1 bis 16, **dadurch gekennzeichnet, dass** unter dem Boden (10, 40) ein Windhaus (80) angeordnet ist, das eine mit Prozessluft (77) beaufschlagbare erste Kammer (82) aufweist, die die Schlitze (14, 44) im radial äußeren Bereich (17) mit Prozessluft versorgt, und dass ferner eine mit Prozessluft (77) beaufschlagbare zweite Kammer (84) vorgesehen ist, die die Schlitze (20, 50) im radial inneren Bereich (23) mit Prozessluft (77) versorgt.

18. Vorrichtung nach Anspruch 17, **dadurch gekennzeichnet, dass** eine dritte Kammer (86) vorgesehen ist, durch die die Aufbruchzone (26, 76) mit Prozessluft (77) versorgbar ist.

## Claims

1. Device for the treatment of particulate material (75), with a process chamber (76) for the reception and treatment of the material (75), a bottom (10, 40) of the process chamber (76) having slots (14, 20; 44, 50), by which process air (70) can be introduced with a horizontal movement component into the process chamber (76), the slots (14, 20; 44, 50) being oriented in such a way that a first flow (19) which has a movement component directed from the outside inwards occurs in a radially outer region (17), and in such a way that a second flow (25) which has a flow component directed from the inside outwards occurs in a radially inner region (23), the two opposite flows (19, 25) reaching one another along a circular break-up zone (26, 56), **characterized in that** the slots (14, 20; 44, 50) are led approximately tangentially to the circular break-up zone (26, 56), as seen perpendicularly to the bottom (10, 40).

2. Device of Claim 1, **characterized in that** the slots (14) in the radially outer region (17) and the slots (20) in the radially inner region (23) are codirectionally led approximately tangentially to the circular break-up zone (26), as seen in the circumferential direction of the break-up zone (26).

3. Device of Claim 1, **characterized in that** the slots (44) in the radially outer region and the slots (50) in the radially inner region are contradirectionally led approximately tangentially to the circular break-up zone (56), as seen in the circumferential direction of the break-up zone (56).

4. Device of anyone of Claims 1 to 3, **characterized in that** the slots (14, 20; 44, 50) are curved as such.

5. Device of anyone of Claims 1 to 4, **characterized in that** a curvature of the slots (14, 20; 44, 50) becomes the greater, the more these approach the break-up zone (26, 56).

6. Device of anyone of Claims 1 to 5, **characterized in that** the slots (14, 20; 44, 50) are cut out, inclined, in the bottom (10, 40).

7. Device of anyone of Claims 1 to 6, **characterized in that** the slots (14, 20; 44, 50) have approximately identical spacings from one another, as seen in the circumferential direction.

8. Device of anyone of Claims 1 to 7, **characterized in that** the slots (14, 20; 44, 50) have approximately identical slot widths (62), as seen in the circumferential direction.

9. Device of anyone of Claims 1 to 8, **characterized in that** the bottom (10, 20) has a first bottom plate (11, 41) in which the slots (14, 44) are cut out by the removal of material.

10. Device of Claim 9, **characterized in that** the first bottom plate (11, 41) has an outer ring (12; 42) which covers the radially outer region (17) and, furthermore, has a radially inner part (18, 52) which covers the radially inner region (23), the break-up zone (26, 56) lying between these two regions.

11. Device of anyone of Claims 1 to 10, **characterized in that** an annular gap nozzle (28, 58) is arranged in the break-up zone (26, 56).

12. Device of anyone of Claims 1 to 11, **characterized in that** a second bottom plate (60) is arranged, spaced apart from the first bottom plate (11, 41), on the inflow side, can be moved up to the first bottom plate (11, 41) on the inflow side and, in this state, closes the slots (14, 20; 44, 50) of the first bottom plate (11, 41).

13. Device of Claim 12, **characterized in that** in the second bottom plate (60) orifices are present through which process air (77) can be led to the underside of the first bottom plate (11, 41).

14. Device of Claim 13, **characterized in that** the orifices in the second bottom plate (60) are designed as slots (62), the slot pattern of which corresponds to the slot pattern of the slots of the first bottom plate (11, 41), the second bottom plate (60), in the state in which it is moved up to the underside of the first bottom plate (11, 41), being offset circumferentially such that the slots of the first bottom plate (11, 41) are covered by material bridges between the slots (62) of the second bottom plate (60).

15. Device of Claim 14, **characterized in that** the slots (62) in the second bottom plate (60) are wider than the slots in the first bottom plate (11, 41).

16. Device of Claims 14 or 15, **characterized in that** the slots (62) in the second bottom plate (60) run exactly perpendicularly to the plate surface, hence with no inclination.

17. Device of anyone of Claims 1 to 16, **characterized in that**, beneath the bottom (10, 40) a cowl (80) is arranged which has a first chamber (82) which can be acted upon with process air (77) and supplies the slots (14, 44) in the radially outer region (17) with process air, and **in that**, furthermore, a second chamber (84) is provided which can be acted upon with process air (77) and supplies the slots (20, 50) in the radially inner region (23) with process air (77).

18. Device of Claim 17, **characterized in that** a third chamber (86) is provided, through which the break-up zone (26, 76) can be supplied with process air (77).

## Revendications

1. Dispositif de traitement de produit particulaire (75) comprenant une chambre de traitement (76) pour recevoir et traiter le produit (75), un fond (10, 40) de la chambre de traitement (76) présentant des fentes (14, 20 ; 44, 50) par le biais desquelles l'air de traitement (70) peut être introduit dans la chambre de traitement (76) avec une composante de déplacement horizontale, les fentes (14, 20 ; 44, 50) étant orientées de telle sorte que dans une région radialement extérieure (17), un premier écoulement (19) se produise, lequel présente une composante de déplacement orientée de l'extérieur vers l'intérieur, et que dans une région radialement intérieure (23), un deuxième écoulement (25) se produise, lequel présente une composante de déplacement orientée de l'intérieur vers l'extérieur, les deux écoulements opposés (19, 25) se rencontrant le long d'une zone de rupture circulaire (26, 56), **caractérisé en ce que** les fentes (14, 20 ; 44, 50), vues perpendiculairement sur le fond (10, 40), sont rapprochées approximativement tangentiellement de la zone de rupture circulaire (26, 56).

2. Dispositif selon la revendication 1, **caractérisé en ce que** les fentes (14) dans la région radialement extérieure (17) et les fentes (20) dans la région radialement intérieure (23), vues dans la direction périphérique de la zone de rupture (26), sont rapprochées dans le même sens approximativement tangentiellement de la zone de rupture circulaire (26).

3. Dispositif selon la revendication 1, **caractérisé en ce que** les fentes (44) dans la région radialement extérieure et les fentes (50) dans la région radialement intérieure, vues dans la région périphérique de la zone de rupture (56), sont rapprochées en sens inverse approximativement tangentiellement de la zone de rupture circulaire (56).

4. Dispositif selon l'une quelconque des revendications 1 à 3, **caractérisé en ce que** les fentes (14, 20 ; 44, 50) en tant que telles sont courbées.

5. Dispositif selon l'une quelconque des revendications 1 à 4, **caractérisé en ce qu'**une courbure des fentes (14, 20 ; 44, 50) est d'autant plus forte que celles-ci se rapprochent davantage de la zone de rupture (26, 56).

6. Dispositif selon l'une quelconque des revendications 1 à 5, **caractérisé en ce que** les fentes (14, 20 ; 44, 50) sont évidées de manière inclinée dans le fond (10, 40).

7. Dispositif selon l'une quelconque des revendications 1 à 6, **caractérisé en ce que** les fentes (14, 20 ; 44, 50), vues dans la direction périphérique, présentent approximativement des intervalles identiques les unes des autres.

8. Dispositif selon l'une quelconque des revendications 1 à 7, **caractérisé en ce que** les fentes (14, 20 ; 44, 50), vues dans la direction périphérique, présentent approximativement les mêmes largeurs de fente (62).

9. Dispositif selon l'une quelconque des revendications 1 à 8, **caractérisé en ce que** le fond (10, 20) présente une première plaque de fond (11, 41) dans laquelle les fentes (14, 44) sont évidées par enlèvement de matière.

10. Dispositif selon la revendication 9, **caractérisé en ce que** la première plaque de fond (11, 41) présente une bague extérieure (12 ; 42) qui occupe la région radialement extérieure (17) et en outre une partie radialement intérieure (18, 52) qui occupe la région radialement intérieure (23), la zone de rupture (26, 56) étant située entre ces deux régions.

11. Dispositif selon l'une quelconque des revendications 1 à 10, **caractérisé en ce qu'**une buse à fente annulaire (28, 58) est disposée dans la zone de rupture (26, 56).

12. Dispositif selon l'une quelconque des revendications 1 à 11, **caractérisé en ce qu'**à distance de la première plaque de fond (11, 41), du côté de l'afflux, est disposée une deuxième plaque de fond (60), laquelle peut être rapprochée du côté de l'afflux de la première plaque de fond (11, 41) et dans cet état, ferme les fentes (14, 20 ; 44, 50) de la première plaque de fond (11, 41).

13. Dispositif selon la revendication 12, **caractérisé en ce que** dans la deuxième plaque de fond (60) sont prévues des ouvertures à travers lesquelles de l'air de traitement (77) peut être guidé jusqu'au côté inférieur de la première plaque de fond (11, 41).

14. Dispositif selon la revendication 13, **caractérisé en ce que** les ouvertures dans la deuxième plaque de fond (60) sont réalisées sous forme de fentes (62) dont la forme de fente correspond à la forme de fente des fentes de la première plaque de fond (11, 41), la deuxième plaque de fond (60), dans l'état du côté inférieur de la première plaque de fond (11, 41), étant décalée sur la périphérie de telle sorte que les fentes de la première plaque de fond (11, 41) soient recouvertes par des ponts de matériau entre les fentes (62) de la deuxième plaque de fond (60).

15. Dispositif selon la revendication 14, **caractérisé en ce que** les fentes (62) dans la deuxième plaque de fond (60) sont plus larges que les fentes dans la première plaque de fond (11,41).

16. Dispositif selon la revendication 14 ou 15, **caractérisé en ce que** les fentes (62) dans la deuxième plaque de fond (60) s'étendent exactement perpendiculairement à la surface de plaque, et donc de manière non courbe.

17. Dispositif selon l'une quelconque des revendications 1 à 16, **caractérisé en ce que** sous le fond (10, 40) est disposée une boîte à vent (80) qui présente une première chambre (82) pouvant être sollicitée par de l'air de traitement (77), laquelle alimente les fentes (14, 44) dans la région radialement extérieure (17) avec de l'air de traitement, et **en ce qu'**en outre une deuxième chambre (84) pouvant être sollicitée avec de l'air de traitement (77) est prévue, laquelle alimente les fentes (20, 50) dans la région radialement intérieure (23) avec de l'air de traitement (77).

18. Dispositif selon la revendication 17, **caractérisé en ce qu'**une troisième chambre (86) est prévue, à travers laquelle la zone de rupture (26, 76) peut être alimentée en air de traitement (77).
